# DEMANDE DE BREVET EUROPEEN

(11) **EP 0 566 486 A1**
(43) Date de publication de la demande: **20.10.1993**
(21) Numéro de dépôt: 93400974.7
(22) Date de dépôt: 14.04.1993
(51) Int. Cl.: B65G 45/12, E21B 43/04

(54) **Dispositif de raclage à doigts porte-lame multiples pour bande transporteuse**

(30) Priorité: 15.04.1992 FR 9204648
(71) Demandeur: Dayan, Claude, F-94800 Villejuif (FR)
(72) Inventeur: Dayan, Claude, F-94800 Villejuif (FR)
(74) Mandataire: Thibon-Littaye, Annick

(57) **Abrégé**

s La présente invention concerne un dispositif de raclage à doigts porte-lame multiples pour bande transporteuse (2), du type comportant une pluralité de doigts porte-lame (3) juxtaposés de façon contigüe, portant chacun une lame de raclage (4, 5) et montés de façon amovible sur un support commun (11 à 14) sensiblement rigide qui est lui-même monté à position réglable sur un chassis (15), caractérisé en ce que chaque doigt (3) est réalisé d'une seule pièce en matière élastique, synthétique et est fixé par sa base sur le support (11 à 14) par un organe de fixation propre (21 à 24) et en ce que chaque doigt (3) comporte dans sa tête un insert (7) fixé par surmoulage de fixation d'une lame de raclage (4, 5).

## Description

La présente invention concerne un dispositif de raclage à doigts porte-lame multiples pour bande transporteuse, du type comportant une pluralité de doigts porte-lame juxtaposés de façon contigüe, qui portent chacun une lame de raclage. Ces doigts sont montés de façon amovibles sur un support commun, qui est réalisé en un matériau rigide, par exemple, un métal, et qui est lui-même monté en position réglable sur un chassis.

Un tel dispositif présente, par rapport aux racleurs rigides monopièces, l'avantage d'assurer un raclage effectué avec une pression régulière, évitant notamment les inconvénients dûs aux accoûts causés par des matériaux incrustés dans la bande transporteuse.

Etant donné les contraintes importantes que subissent les lames de raclage et les doigts qui les portent, il est nécessaire de pouvoir démonter les doigts porte-lame afin de les remplacer.

Dans les dispositifs de raclage connus, les doigts porte-lame sont montés sur le support commun par engagement de ce support dans un évidement des doigts.

Les doigts sont ainsi enfilés les uns à la suite des autres le long de ce support qui présente une section droite rectangulaire.

Lorsque l'on veut remplacer un doigt porte-lame détérioré, il est donc nécessaire de démonter, non seulement ce doigt, mais également au moins une partie des autres doigts porte-lame du dispositif.

Il en résulte que l'opération de changement de doigt porte-lame nécessite de longues manipulations et, par conséquent, occasionne un arrêt prolongé du fonctionnement de la bande transporteuse.

Un autre inconvénient des dispositifs connus est que les résidus des matières transportées par les bandes que l'on cherche à éliminer par raclage ont tendance à tomber sur les dispositifs de raclage, ce qui, en fonction du type de résidus, peut provoquer un colmatage du dispositif pouvant entraver son fonctionnement.

La présente invention vise notamment à remédier à ces inconvénients et à proposer un dispositif de raclage qui, tout en assurant un raclage optimum de la bande transporteuse, permet de simplifier les opérations de maintenance.

Selon sa caractéristique principale, la présente invention concerne un dispositif de raclage à doigts porte-lame multiples pour bande transporteuse, du type comportant une pluralité de doigts porte-lame juxtaposés de façon contigüe, portant chacun une lame de raclage et montés de façon amovible sur un support commun sensiblement rigide qui est lui-même monté à position réglable sur un chassis, caractérisé en ce que chaque doigt est réalisé d'une seule pièce en matière élastique, synthétique et est fixé par sa base sur le support par un organe de fixation propre ; et en ce que chaque doigt comporte dans sa tête un insert fixé par surmoulage de fixation d'une lame de raclage.

Chaque doigt présente avantageusement dans sa base deux faces d'appui non parallèles entre elles par lesquelles le doigt est en contact avec des faces correspondantes du support lorsqu'il est fixé sur ce dernier ; et lesdites faces d'appui créant un décrochement d'appui à forme complémentaire sur ledit support sur une face du doigt opposée à une face située en regard de la bande transporteuse, et lesdites faces d'appui étant de préférence orthogonales entre elles.

On obtient ainsi un dispositif de raclage dans lequel la fixation de chaque doigt s'effectue de manière indépendante sans qu'il soit nécessaire d'intervenir sur les doigts voisins, ce qui simplifie considérablement les opérations de maintenance pour remplacer un doigt.

En outre, le fait de prévoir que chaque doigt porte-lame est réalisé d'une seule pièce par exemple par moulage d'une matière élastique synthétique du type élastomère simplifie la fabrication des doigts porte-lame.

Toujours dans le souci de simplifier la maintenance du dispositif, chaque doigt présente avantageusement au niveau de sa tête, sur une face en regard de ladite bande transporteuse, un épaulement dont le fond constitue une surface d'appui pour une extrémité apparente dudit insert de fixation d'une lame de raclage et définissant un logement pour ladite lame de raclage et pour des moyens de fixation de cette dernière audit insert.

Ainsi, les lames de raclages peuvent être remplacées individuellement sans pour autant avoir à remplacer à chaque fois l'ensemble du doigt. On contribue ainsi à réduire les coûts de la maintenance en offrant la possibilité de remplacer, soit la lame, soit le doigt en fonction de l'usure que subissent les différents éléments.

En effet, dans ce type d'installation, l'usure des lames ou des doigts n'est pas régulière, ni équivalente d'un ensemble doigt-lame à un autre sur la largeur de la bande. Cette usure est en fonction non seulement de la matière transportée, mais également de la position de l'ensemble doigt-lame dans la largeur de la bande, les matières pouvant avoir tendance, durant le transport, à se regrouper vers le centre de la bande.

Le doigt en lui-même de par sa souplesse et son élasticité, assure un placage optimum de la lame contre la bande et son usure dépend donc des sollicitations qu'il subit en ce sens alors que l'usure de la lame proprement dite est fonction de la quantité de matière qu'elle a eu à racler.

Pour que des dilatations pouvant se produire au niveau des doigts ne visent pas à la qualité du raclage obtenu, ladite lame présente avantageusement une longueur quelque peu supérieure à la largeur du doigt sur lequel elle est montée, de sorte à laisser subsister, entre deux doigts voisins, un jeu de dilatation.

Afin d'éviter la pénétration dans le jeu entre les doigts de débris issus de la bande en cours de raclage, il est avantageux de prévoir sur chacun des doigts, sur leur face côté lame, un rebord tourné vers un doigt voisin, ce rebord étant engagé dans un évidement de forme correspondante prévu dans ce doigt voisin de manière à réaliser entre deux doigts consécutifs une chicane.

En fonction des applications et notamment du type de matière transportée par la bande qui intervient sur la pression avec laquelle les lames doivent porter sur la bande, on réalise les doigts avec une dureté appropriée. La dureté shore du polyuréthane avec laquelle sont constitués les doigts peut par exemple être comprise entre 60 et 100.

Si l'on souhaite accroître la raideur des doigts, on prévoit avantageusement une âme à ressort en acier moulé dans chaque doigt.

La lame racleuse que porte chaque doigt est avantageusement fixée sur ledit insert solidarisé par surmoulage avec ledit doigt.

Chaque lame racleuse est constituée avantageusement d'un corps et d'un embout en forme de barreau constituant la pièce de raclage proprement dite et réalisé en matériau dur, ce barreau étant de section droite rectangulaire et étant fixé sur le corps par exemple par brasage.

Le barreau peut par exemple être réalisé en carbure de tungstène, en céramique, en acier inoxydable, voire même en polyuréthane ou tout autre matériau approprié à la nature de la bande et du matériau à racler.

Acet effet, le corps présente à une extrémité une gorge en forme de dièdre rectangle dans laquelle est logé le barreau. L'une des faces libre du barreau constitue la face par laquelle la lame entre en contact avec la bande transporteuse.

Selon une autre caractéristique de l'invention, l'organe de fixation comprend avantageusement un organe de vissage traversant le doigt par un alésage de ce dernier ouvert aux deux extrémités, et ledit alésage est muni d'une virole métallique de renforcement de longueur axiale quelque peu inférieure à celle dudit alésage.

Selon un mode de réalisation préféré, le support commun comporte une paroi dont l'épaisseur est sensiblement égale à celle desdits décrochements des doigts, de sorte que, lorsqu'ils sont fixés sur le support, les doigts présentent, du côté opposé à la bande transporteuse, une surface qui se raccorde sans décrochement avec la face adjacente de ladite paroi du support commun.

Pour l'obtention de cette paroi et pour permettre de placer le dispositif dans une position où les organes de fixation des lames et des doigts sont aisément accessibles, ledit support commun comporte avantageusement un profilé en forme de chaise dont le dossier constitue surface d'appui pour ledit épaulement d'appui de chaque doigt, et qui est monté sur un tube, de section sensiblement parallélépipédique dans une partie centrale, et de section sensiblement cylindrique à ses extrémités pour être engagé de part et d'autre dans un pallier monté à position réglable dans ledit chassis.

Afin de retrouver aisément la position de travail dans laquelle doivent se trouver les lames après une intervention de maintenance, lesdites extrémités du tube comportent avantageusement sur au moins une génératrice, un méplat destiné à coopérer avec un organe de verrouillage en rotation du tube dans les palliers, dans une position de travail des lames de raclage.

Cette conformation permet en outre de ne pas modifier les réglages relatifs à la pression des lames sur la bande lors d'une opération de maintenance, réglages qui sont obtenus comme on le verra par la suite, par le réglage de la position du pallier sur le chassis dans le sens de défilement de la bande.

En pratique, la partie centrale du tube est creuse et destinée à recevoir, à chacune de ces extrémité, un demi-arbre dont une extrémité présente une section carrée s'engageant dans le creux du tube et dont l'autre extrémité constitue ce que l'on a appelé ci-dessus une des extrémités de section sensiblement cylindrique du tube et s'engage dans les palliers. Ceci permet de pouvoir adapter la longueur à l'écartement entre les deux palliers, les demi-arbres étant fixés au tube au moyen d'une vis traversant une paroi du tube.

Afin de permettre qu'un déplacement de la bande transporteuse en sens inverse du sens normal ne détériore pas le dispositif, il est avantageux de prévoir un moyen permettant par commande à distance de mettre le support commun comportant les doigts de raclage dans une position dégagée pour laquelle les doigts sont légèrement écartés de la bande transporteuse.

A cet effet, le chassis sur lequel est monté le support commun, est lui-même monté sur un bâti de manière à pouvoir basculer autour d'un axe horizontal, entre une position engagée pour laquelle les lames sont en contact avec la bande transporteuse, et une position dégagée pour laquelle les doigts sont écartés de ladite bande transporteuse.

Ce basculement que l'on peut assimiler à un débrayage du dispositif de raclage est avantageusement obtenu au moyen d'un premier organe moteur constitué d'un premier vérin agissant sur une extrémité du chassis proximale de la bande transporteuse par rapport à l'axe horizontal de basculement.

Il est particulièrement intéressant que la position engagée ou dégagée dans laquelle se trouvent les lames, soit maintenue sans qu'un incident dans la commande de l'organe moteur puisse engendrer un retour intempestif dans l'autre position.

Pour cela, on peut utiliser un vérin double-effet à commande électrique, mais pour des applications où les matières transportées par la bande requièrent des précautions particulières relatives aux risques d'inflammation ou d'explosion, on préférera faire appel à un vérin à commande hydraulique ou pneumatique.

Dans ce cas, le chassis basculant est avantageusement associé, pour actionner son basculement, à un premier organe moteur comprenant un premier vérin à fluide sous pression, et à un verrou escamotable commandé par un second organe moteur comprenant un second vérin à fluide sous pression coopère avec ledit chassis basculant pour maintenir ce dernier en position engagée en cas de fuite du fluide moteur dudit premier vérin.

Cette possibilité, de rendre débrayable le dispositif, peut également être utilisé dans le cas où la bande transporteuse sans fin est obtenue par liaison de ses deux extrémités au moyen d'agraffes métalliques.

Dans ce cas, il est particulièrement intéressant de disposer d'un dispositif de raclage qui puisse être débrayé automatiquement au passage des agraffes devant les lames pour éviter que ces dernières ne soient endommagées, ou pour le moins en accroître la longévité. Les moyens de basculement utilisés selon l'invention permettent une telle application, la détection du passage des agraffes pouvant être obtenue par des capteurs positionnés de manière adéquate.

D'autres caractéristiques et avantages de l'invention ressortiront de la description qui va suivre d'un mode de réalisation de l'invention, description faite en regard des phases annexées dans lesquelles :
- la figure 1 est une vue shématique en perspective d'un dispositif de raclage selon un mode de réalisation de l'invention ;
- La figure 2 est une section droite selon le plan P de la figure 1 ;
- La figure 3 est un vue shématique en élévation en coupe verticale selon le plan Q de la figure 1 ;
- La figure 4 est une vue partielle shématique en perspective du dispositif de la figure 1.

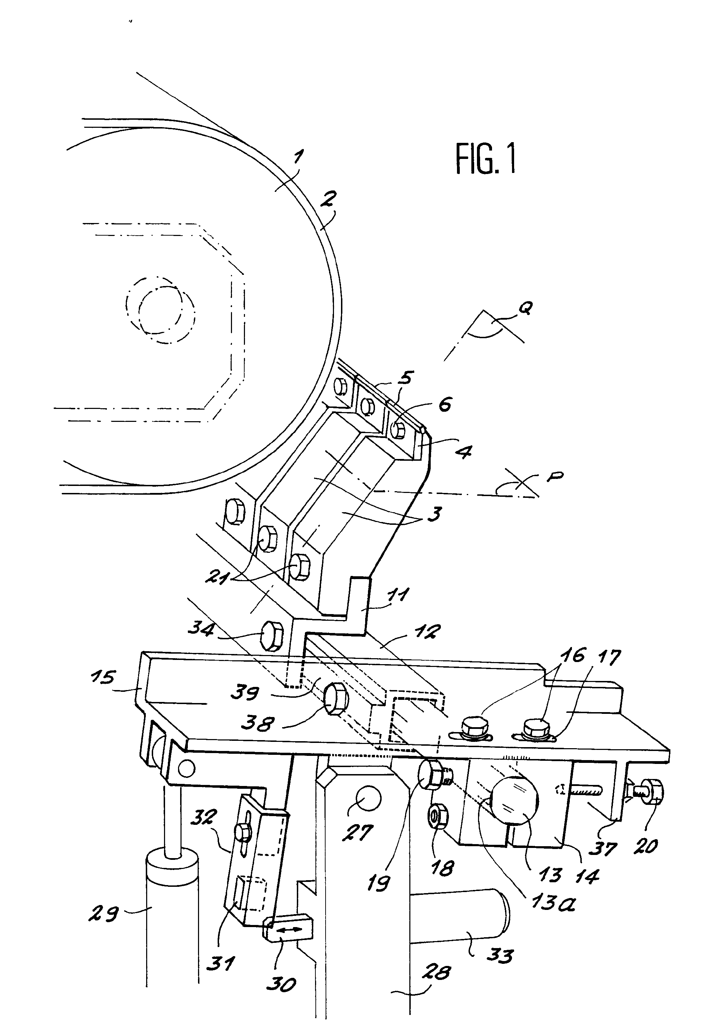

Sur la figure 1, on peut voir le rouleau de renvoi 1 d'une bande transporteuse sans fin 2.

Sur ces figures, seuls les éléments essentiels ont été représentés et l'échelle n'est pas recpectée pour des raisons de clarté.

Le dispositif de raclage représenté sur cette figure comprend une pluralité de doigts porte-lame 3 réalisé en matériaux élastiques, par exemple en polyuréthane.

Les doigts 3 portent à une extrémité une lame racleuse qui comprend un support 4 muni à son extrémité d'un barreau en carbure de tungstène 5.

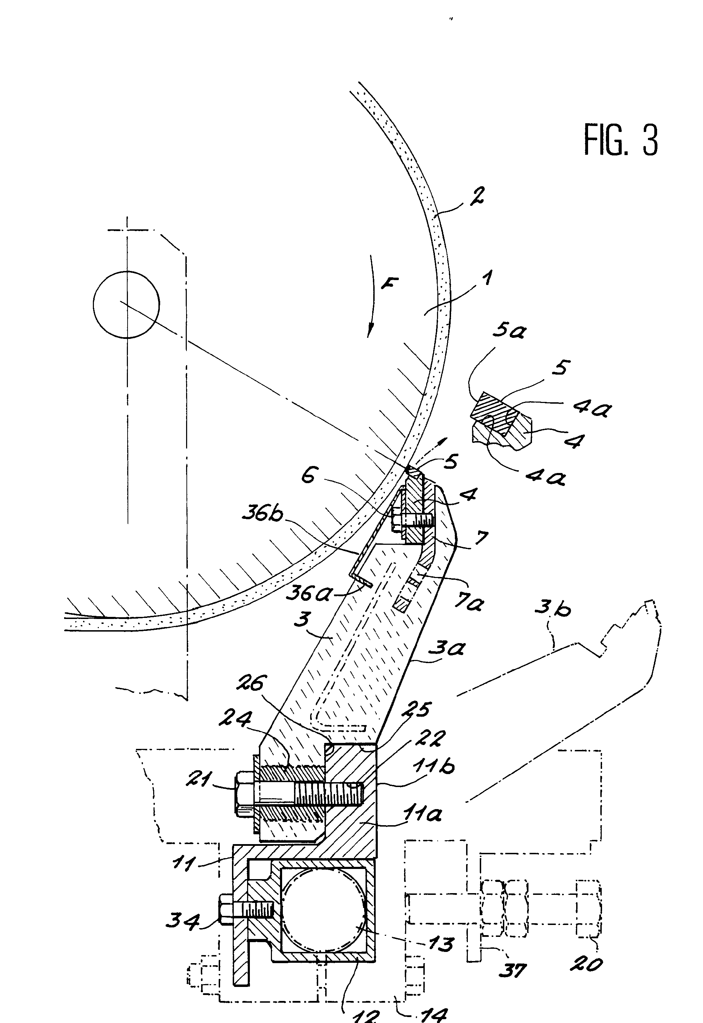

Comme on peut le voir plus particulièrement sur la figure 3, la lame 4, 5 est fixée au moyen d'une vis 6 sur un insert 7 fixé par surmoulage dans le doigt 3. Afin d'améliorer la solidité de la fixation de l'insert dans le doigt 3, des trous 7a sont prévus dans la partie de l'insert 7 qui est entièrement noyé dans le doigt 3 par surmoulage.

Le barreau 5 est de section droite rectangulaire et il est logé dans une gorge en forme de dièdre rectangle prévu sur la tranche supérieur du support 4.

Les faces 4a du dièdre du support 4 sont avantageusement orientées obliquement par rapport au plan général du support 4, de manière à permettre une meilleure assise du barreau 5 qui est fixé sur le support 4 par exemple par rasage.

Lorsque le dispositif de raclage est en fonctionnement, l'une des faces 5a du barreau 5 est appliquée sensiblement à plat sur la bande transporteuse, à nettoyer.

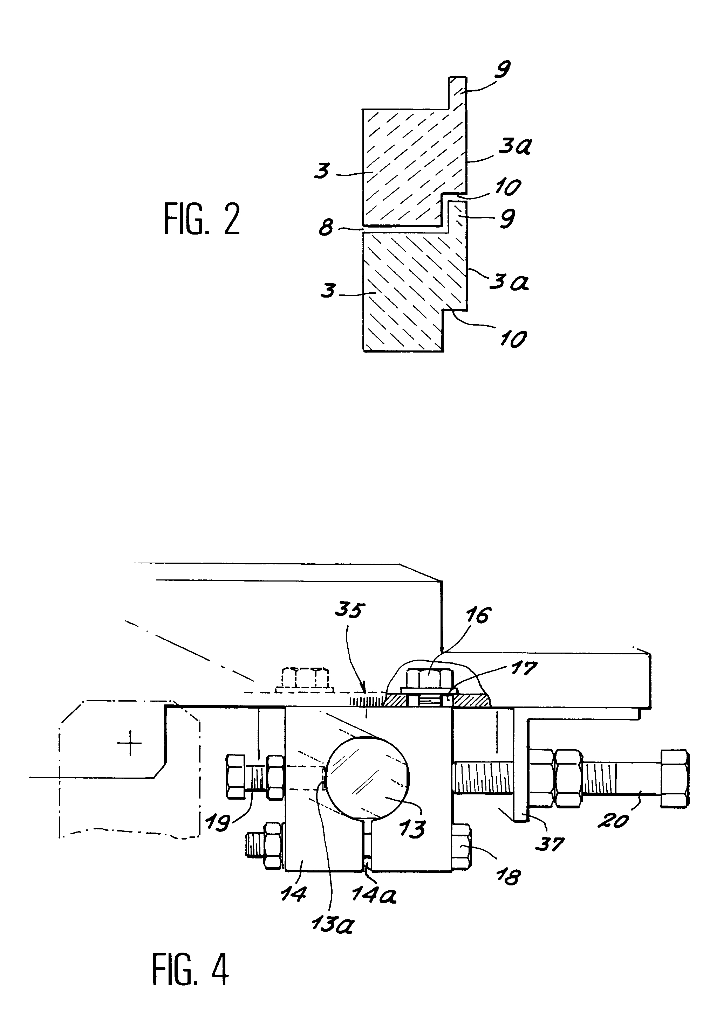

Comme le montre la figure 2, un faible jeu 8, par exemple de deux millimètres est prévu entre chaque doigt porte-lame 3 afin de prévoir les dilatations différentielles. Cependant, comme le montre la figure 1, les barreaux 5 portés par deux doigts 3 voisins sont sensiblement en contact l'un avec l'autre pour assurer un bon raclage de la bande. Les barreaux 5 sont donc légèrement plus longs que la largeur des doigts porte-lame 3.

Afin d'éviter l'encrassement de l'espace, ou jeu, situé entre deux doigts 3 voisins, on réalise dans l'interstice 8 subsistant entre ces doigts, une chicane qui, comme le montre la figure 2, est constituée par un rebord 9 prévu sur un côté des doigts 3, ce rebord s'engageant dans un évidement 10 de forme et dimension correspondante prévu dans la face adjacente du doigt voisin.

Le rebord 9 et l'évidement 10 sont situés du côté des doigts 3 en regard de la bande transporteuse 2.

En effet, le risque d'encrassement du jeu entre deux doigts voisins existe surtout sur la face des doigts 3 qui se trouve sous la bande transporteuse 2 après les lames de raclage dans le sens de défilement (flèche F, figure 3) de la bande, où des coulures de jus issues des matières transportées se produisent le plus fréquemment.

En pratique, le rebord 9 et l'évidement 10 sont de préférence réalisés par surmoulage, sur cette face du doigt 3, d'une plaque (non représentée) de largeur identique à la largeur du doigt mais décalée latéralement pourconstituerd'un côté le rebord 9 et de l'autre côté l'évidement 10.

Le fait de prévoir un tel surmoulage permet en outre que cette plaque soit en polyuréthane de dureté shore inférieure à la dureté shore du polyuréthane constituant le doigt ce qui confère au rebord 9, formant en quelque sorte lèvre d'étanchéité, une souplesse plus grande.

Bien que cela n'apparaisse pas sur la figure 2 pour des raisons de clarté du dessin, cette lame est en pratique suffisement fine pour avoir une certaine élasticité permettant que la face interne du rebord 9 appuie sur la paroi de l'évidement 10 qui lui est parral- lèle.

Pour éviter l'encrassement du logement définit dans la tête du doigt 3, par l'épaulement constituant surface d'appui pour l'insert 7, on prévoit avantageusement un cache ayant approximativement la forme d'un profilé en L dont la base 36a s'engage dans une rainure appropriée ménagée, dont la face des doigts 3 comportant les rebords 9 et évidement 10 et dont la branche 36b recouvrent le logement en reposant par son extrémité contre le corps 4 de la lame.

Revenant sur la figure 1, on voit que les doigts 3 sont fixés sur un support commun qui est constitué par un profilé à sections en forme de chaise ou de marche d'escalier Il fixé lui-même, au moyen de vis 34, sur un profilé tubulaire de section carrée 12.

Le profilé 12 se termine à chacune de ses extrémités par un embout cylindrique 13 fixé dans un pallier ou bloc de serrage 14.

En fait, la partie centrale du tube 12 est creuse et recoit, à chacune de ces extrémité, un demi-arbre dont une extrémité présente une section carrée s'engageant dans le creux du tube 12 et dont l'autre extrémité constitue l'embout cylindrique 13 et s'engage dans les palliers 14. Les demi-arbres sont fixés au tube au moyen d'une vis 38 traversant une paroi du tube 12.

Le fait que la partie centrale du tube 12 soit creuse conduit à ce que pour la fixation du profilé 11, la paroi recevant la paroi du tube 12 recevant les vis de fixation 34 comporte un épaulement 39 pour éviter que les vis 34 n'atteignent le creux du tube 12. C'est pourquoi le tube 12 est définit comme étant sensiblement de section carré.

Chaque bloc 14 est monté à position réglable sur un chassis 15 au moyen de deux vis 16 traversant des lumières oblongues 17 du chassis 15.

Chaque bloc de serrage 14 est muni d'une fente 14a, d'un boulon de serrage 18 permettant le coincement de l'embout 13 dans le bloc 14, et d'une vis de blocage 19 assurant le blocage en rotation de l'embout 13, cette vis venant appuyer sur un méplat 13a, ménagé sur une génératrice de l'extrémité cylindrique 13, et permettant de retrouver aisément la position de travail du dispositif suite à une intervention de maintenance sur les lames ; intervention pour laquelle les doigts 3 sont placés dans une position rendant aisément accessibles les organes de fixation des lames ou des doigts, comme le montre la silhouette 3b sur la figure 3. Cette position étant atteinte par rotation des extrémités 13 du tube 12 dans les palliers 14.

Chaque bloc 14 est associé pour la commande de son déplacement le long des lumières oblongues 17, à une vis de réglage 20 qui est vissée dans un taraudage d'une cornière 37 du chassis 15, et dont l'extrémité libre agit sur le bloc 14. Ce réglage permet de fixer la pression des lames sur la bande transporteuse. On peut également prévoir sur le chassis 15 d'aposer une règle graduée 35 de repérage de la pression.

Comme le montre plus particulièrement la figure 3, chaque doigt 3 est fixé sur le profilé 11 au moyen d'une vis 21 se vissant dans un taraudage borgne 22 ménagé dans l'aile de plus forte épaisseur 11 a du profilé 11.

La vis 21 traverse un alésage ouvert aux deux extrémités 23 pratiquées dans l'extrémité inférieur de chaque doigt 3.

Une virole métallique de renforcement 24 est montée dans l'alésage 23 de manière à éviter l'écrasement de l'extrémité inférieure de chaque doigt 3 lors du serrage de la vis 21.

La virole 24 présente une longueur axiale légèrement inférieure à celle de l'alésage 23 pour parfaire la tenue du doigt en autorisant un léger écrasement.

Comme on peut le voir sur les dessins, le doigt 3 prend appui sur le dossier 11 a du profilé 11 par deux surfaces de contact 25, 26 formant un dièdre rectangle orienté en sens opposé de la bande transporteuse 2.

La surface 25 présente une largeur identique à l'épaisseur de l'aile 11a de manière à éviter tout décrochement entre la face 3a du doigt située à l'opposé de la bande transporteuse 2 et la face 11 b qui lui fait suite, de l'aile 11a.

Comme on peut le voir sur la figure 1, le chassis 15 est monté oscillant autour d'un axe horizontal 27 sur un montant 28 d'un bâti fixe.

Le chassis 15 est pivoté autour de l'axe 27 au moyen d'un premier vérin hydraulique ou pneumatique à double effet 29. Des butées fixes non représentées assurent une limitation dans les deux sens de la course de rotation du chassis 15.

Grâce à ce montage basculant, l'ensemble formé par le chassis 15, le support commun 11, 12, 13, 14 et les doigts 3 peut être mis dans une position dégagée, pour laquelle l'ensemble des doigts porte-lame 3 est dégagée de la bande transporteuse 2, comme le montre la figure 1.

Cette position dégagée permet de débrayer distance le dispositif, par exemple lorsque la bande doit être mue en sens inverse par rapport à son sens de transport (flèche F, figure 3) ou pour faciliter le passage d'agraffes de liaison en boucle des deux extrémités de la bande.

Afin de donner une bonne stabilité à cette position dégagée, l'ensemble formé par le support commun 11 à 14, et les doigts 3 est situé à l'opposé du vérin 29, par rapport à l'axe de deux pivotements 27.

Un axionnement du vérin 29 permet la mise de l'ensemble en position engagée, pour laquelle les barreaux 5 sont en contact par leur face 5a avec la bande transporteuse 2.

Pour éviter que, en cas de panne du vérin 29 dû par exemple à une fuite de fluide, l'ensemble se mette en position dégagée alors que la bande transporteuse 2 est en fonctionnement, on prévoit un dispositif de verrouillage constitué par la tige escamotable 30 d'un second vérin 33 susceptible de s'engager dans une gâche 31 prévue dans un bras vertical d'indexage 32 qui est fixé, de façon réglable en hauteur, sur le chassis basculant 15.

Il est à noter que la pression avec laquelle les barreaux 5 appuient sur la bande transporteuse 2, et réglée au moyen de la vis 20 agissant sur les blocs 14, les vis 16 étant dessérées.

Cette pression peut également dépendre de la position de la barre verticale d'indexage 32.

Bien entendu, la description qui vient d'être faite n'est donnée qu'à titre indicatif et ne limite nullement l'invention qui englobe toutes les variantes possibles du dispositif décrit.

En particulier, le vérin, un fluide moteur 29 peut être remplacé par un vérin électrique.

## Revendications

1/ Dispositif de raclage à doigts porte-lame multiples pour bande transporteuse (2), du type comportant une pluralité de doigts porte-lame (3) juxtaposés de façon contigüe, portant chacun une lame de raclage (4, 5) et montés de façon amovible sur un support commun (11 à 14) sensiblement rigide qui est lui-même monté à position réglable sur un chassis (15), caractérisé en ce que chaque doigt (3) est réalisé d'une seule pièce en matière élastique, synthétique et est fixé par sa base sur le support (11 à 14) par un organe de fixation propre (21 à 24), et en ce que chaque doigt (3) comporte dans sa tête un insert (7), fixé par surmoulage, de fixation d'une lame de raclage (4, 5).

2/ Dispositif de raclage selon la revendication 1, caractérisé en ce que chaque doigt (3) présente dans sa base deux faces d'appui non parallèles entre elles (25,26) par lesquelles le doigt est en contact avec des faces correspondantes du support (11 à 14) lorsqu'il est fixé sur ce dernier ; lesdites faces d'appui (25, 26) créant un décrochement d'appui à forme complémentaire sur ledit support sur une face du doigt opposée à une face située en regard de la bande transporteuse.

3/ Dispositif de raclage selon la revendication 2, caractérisé en ce que lesdites faces d'appui (25, 26) sont orthogonales entre elles.

4/ Dispositif de raclage selon l'une quelconque des revendications 1 à 3 caractérisé en ce que chaque doigt (3) présente au niveau de sa tête, sur une face en regard de ladite bande transporteuse, un épaulement, dont le fond constitue une surface d'appui pour une extrémité apparente dudit insert (7) de fixation d'une lame de raclage (4, 5), et définissant un logement pour ladite lame de raclage (4, 5) et pour des moyens de fixation de cette dernière (4, 5) audit insert (7).

5/ Dispositif de raclage selon l'une quelconque des revendications 1 à 4, caractérisé en ce que chaque lame (4, 5) présente une longueur quelque peu supérieure à la largeur du doigt (3) sur lequel elle est montée, de sorte à laisser subsister, entre deux doigts (3) voisins, un jeu de dilatation (8).

6/ Dispositif de raclage selon la revendication 5, caractérisé en ce que chaque doigt (3) présente sur l'une de ses faces latérales, une partie en saillie (9) coopérant avec un évidement de forme correspondante (10) de la face adjacente du doigt (3) voisin, pour constituer une chicane dans ledit jeu de dilatation (8) entre lesdits doigts (3) voisin.

7/ Dispositif de raclage selon l'une quelconque des revendications 1 à 6 caractérisé en ce que chaque doigt est issu de moulage en polyuréthane de dureté shore compris entre 60 et 100.

8/ Dispositif de raclage selon l'une quelconque des revendications 1 à 7 caractérisé en ce que dans chaque doigt (3) est moulée une âme acier à ressort permettant d'accroître la raideur du doigt (3).

9/ Dispositif de raclage selon l'une quelconque des revendications 1 à 8, caractérisé en ce que la lame (4, 5) comporte un corps (4) et un embout (5) en forme de barreau réalisé en un matériau dur, ledit barreau (5) présentant une section droite rectangulaire dont une des faces (5a) constitue la face par laquelle la lame est destinée à entrer en contact sensiblement à plat avec la bande transporteuse (2). 10/ Dispositif de raclage selon la revendication 9, caractérisé en ce que ledit barreau (5) est disposé dans une gorge en forme de dièdre (4a) ménagé dans la tranche du corps (4), les faces (4a) de ce dièdre étant obliques par rapport au plan général dudit corps (4).

11/ Dispositif de raclage selon l'une quelconque des revendications 1 à 10, caractérisé en ce que l'organe de fixation (21 à 24) comprend un organe de vissage (21) traversant le doigt (3) par un alésage (23) de ce dernier ouvert aux deux extrémités, et en ce que ledit alésage (23) est muni d'une virole métallique de renforcement (24) de longueur axiale quelque peu inférieure à celle dudit alésage (23).

12/ Dispositif de raclage selon l'une quelconque des revendications 2 à 11 caractérisé en ce que ledit support commun (11 à 14) comporte un profilé (11) en forme de chaise dont le dossier 11 a constitue surface d'appui pour ledit épaulement d'appui de chaque doigt (3), et qui est monté sur un tube (12), de section sensiblement parallélépipédique dans une partie centrale, et de section sensiblement cylindrique à ses extrémités (13) pour être engagé de part et d'autre dans un pallier (14) monté à position réglable dans ledit chassis (15).

13/ Dispositif de raclage selon la revendication 12 caractérisé en ce que lesdites extrémités (13) du tube (12) comportent surau moins une génératrice, un méplat (13a) destiné à coopérer avec un organe de verrouillage (19) en rotation du tube (12) dans les palliers (14) dans une position de travail des lames de raclage (4, 5).

14/ Dispositif de raclage selon l'une quelconque des revendications 1 à 13, caractérisé en ce que le chassis (15) sur lequel est monté le support commun (11 à 14) des doigts (3), est un chassis basculant susceptible d'être mis :
a. dans une position engagée pour laquelle les lames (4, 5) des doigts (3) sont en contact sur la bande transporteuse (2), et
b. dans une position dégagée pour laquelle les doigts (3) sont écartés de la bande transporteuse (2).

15/ Dispositif de raclage selon l'une des revendications précédentes, caractérisé en ce que le chassis basculant (15) est associé, pour actionner son basculement, à un premier organe moteur comprenant un premier vérin à fluide sous pression (29), et en ce qu'un verrou escamotable (30) commandé par un second organe moteur comprenant un second vérin à fluide sous pression (33) coopère avec ledit chassis basculant (15) pour maintenir ce dernier en position engagée en cas de fuite du fluide moteur dudit premier vérin (29).
